# EUROPEAN PATENT APPLICATION

(11) **EP 3 926 061 A1**
(43) Date of publication of application: **22.12.2021**
(21) Application number: 19914785.1
(22) Date of filing: 13.02.2019
(51) Int. Cl.: C22B 3/00, C22B 23/02

(54) **ECONOMICAL METHOD, USING COMBINATION OF WET AND DRY PROCESSES, FOR SMELTING NICKEL FROM NICKEL SULFIDE ORES**

(71) Applicant: Korea Zinc Co., Ltd., Seoul 06110 (KR); Korea Nickel Corporation, Seongnam-si, Gyeonggi-do 13229 (KR)
(72) Inventor: CHOI, Chang Young, Seoul 06010 (KR); KIM, Byoung-Moon, Ulsan 44534 (KR)
(74) Representative: Lavoix
(86) International application number: PCT/KR2019/001761
(87) International publication number: WO 2020/166735

(57) **Abstract**

An economical nickel smelting method combining a wet and dry process from a nickel concentrate according to an exemplary embodiment of the present invention comprises:
eparating a leachate and leaching cake by leaching a nickel-containing sulfide concentrate with strong acid;
separating a first filtrate and a first impurities including iron by adding oxygen to the leachate;
eparating a second filtrate and a second impurities including cobalt by adding an extraction agent to the first filtrate;
separating a third filtrate and a precipitate including nickel by adding sodium carbonate to the second filtrate; and
producing a nickel product by calcination of the precipitate.

## Description

### CROSS-REFERENCE TO RELATED APPLICATION

This application claims priority to and the benefit of Korean Patent Application No. 10-2019-0016710 filed in the Korean Intellectual Property Office on February 13, 2019, the entire contents of which are incorporated herein by reference.

### BACKGROUND OF THE INVENTION

### (a) Field of the Invention

The present invention relates to an economical nickel smelting process combining wet and dry processes from nickel sulfide concentrates.

### (b) Description of the Related Art

World nickel resources are classified into two main categories: sulfide ore and laterite ore. They are usually found in quite different places, and these types of ores are usually processed independently.

The development process of sulfide ore includes open pit or underground mining. After the ore is primarily crushed, it includes a beneficiation treatment of the ore to separate impurities by flotation. This is essentially a dry metallurgical process.

The beneficiary sulfide concentrate goes through smelting of nickel matte and refining process for nickel recovery. However, the non-metal (base metal) sulfide smelting process is inefficient in terms of energy use due to incomplete oxidation of sulfide and heat loss through gas, slag and products.

Another inefficiency is the large loss of cobalt value to slag from smelted nickel ores or concentrates. The smelting process also generates sulfur dioxide, often makes problem of complicating the sulfuric acid facility part to prevent the release of sulfur dioxide into the atmosphere.

To solve some of the problems associated with sulfide refining, many wet metallurgical methods for treating nickel sulfide concentrates have been academically discussed. These methods generally rely on oxidative pressure leaching of sulfide by sulfuric acid in the leaching process after grinding or fine grinding of the concentrate.

Biological treatment of nickel sulfide is also described, followed by bacterial assisted leaching followed by a solution purification, metal separation and electrowinning.

The long residence time required for this type of process requires a very large reactor for the leaching step, and thus this process cannot achieve commercial success because it requires large capital.

### SUMMARY OF THE INVENTION

The present invention provides an economical nickel smelting process combining wet and dry processes from nickel concentrates, which makes it possible to obtain nickel products containing nickel oxide from nickel sulfide concentrates.

An economical nickel smelting method combining a wet and dry process from a nickel concentrate according to an exemplary embodiment of the present invention comprises:
separating a leachate and leaching cake by leaching a nickel-containing sulfide concentrate with strong acid;
separating a first filtrate and a first impurities including iron by adding oxygen to the leachate;
separating a second filtrate and a second impurities including cobalt by adding an extraction agent to the first filtrate;
separating a third filtrate and a precipitate including nickel by adding sodium carbonate to the second filtrate; and
producing a nickel product by calcination of the precipitate.

After the leaching step, the method further comprises the step of recovering the pressurized leachate by pressure leaching the leaching cake with a strong acid, and in the leaching step, the pressurized leachate is used into the concentrate with strong acid.

The pressure leaching step includes: a step of pressure leaching the leaching cake with a strong acid to separate it into an intermediate leachate and an intermediate cake; and a step of separating the intermediate cake into the pressurized leachate and leaching residue by pressure leaching with strong acid.

After the step of adding sodium carbonate to the second filtrate, a step of adding sodium carbonate to the third filtrate to separate a nickel recovery filtrate and a nickel cake, is further included.

After the step of adding sodium carbonate to the third filtrate, a step of separating into gypsum filtrate and residue by adding calcium hydroxide to the nickel recovery filtrate, is further included.

In the leaching step, leaching the concentrate with strong acid at a temperature of 75 to 95°C.

The leaching step further comprises: reducing iron in the leachate; dissolving nickel in the leachate; and removing hydrogen sulfide generated in the process of dissolving nickel in strong acid in the leachate.

In the pressure leaching step, pressure leaching the leaching cake with strong acid at a temperature of 170 to 190°C.

In the pressure leaching step, pressure leaching the leaching cake with strong acid at a pressure of 13 to 20 bar using an autoclave.

In the pressure leaching step, the nickel is dissolved in the form of nickel sulfate, and the dissolution rate of the nickel is 98 wt% or more with respect to 100 wt% of the entire nickel weight.

In the step of adding oxygen to the leachate, a neutralization agent is added along with the oxygen to separate the first filtrate and the first impurities.

After the step of adding oxygen to the leachate, a step of washing the first impurities with water to separate a washing filtrate and a washing residue containing iron, is further included.

In the step of adding the extraction agent to the first filtrate, sodium carbonate is added together with the extraction agent to separate the second filtrate and the second impurities.

The extraction agent includes PC88A (2-Ethylhexyl phosphonic acid mono-2-ethylhexyl ester).

In the step of adding sodium carbonate to the second filtrate, the second filtrate reacts with the sodium carbonate at a temperature of 70 to 90 °C.

In the step of adding sodium carbonate to the second filtrate, the pH is adjusted to 6 to 8 by adding the sodium carbonate.

In the step of adding sodium carbonate to the second filtrate, a reaction including the following reaction scheme is performed.

[Reaction scheme] 5NiSO₄ + 5Na₂CO₃ + 7H₂O → 2NiCO₃·3Ni (OH)₂·4H₂O↓ + 5Na₂SO₄ + 3CO₂

After the step of adding sodium carbonate to the second filtrate, a step of adding sodium hydroxide to the precipitate and washing with water, further included.

In the step of adding sodium hydroxide to the precipitate, the water washing is performed multiple times to adjust the sulfur content in the precipitate to 0.2 wt% or less.

In the step of adding sodium carbonate to the third filtrate, reacting the third filtrate with the sodium carbonate is performed at a temperature of 70 to 90 °C.

In the step of adding sodium carbonate to the third filtrate, the pH is adjusted to 6 to 8 by adding the sodium carbonate.

The precipitate is calcined at a temperature of 700 to 900°C, and the precipitate contains nickel oxide.

With respect to the entire 100 wt% of the nickel product, sulfur is less than 0.1 wt%.

According to the economical nickel smelting method combining wet and dry processes from nickel concentrate according to an exemplary embodiment of the present invention, it is possible to obtain a nickel product containing high-purity nickel oxide from nickel sulfide concentrate.

### BRIEF DESCRIPTION OF THE DRAWINGS

FIG. 1 is a drawing showing a process diagram of an economical nickel smelting method combining wet and dry processes from nickel concentrate according to an exemplary embodiment of the present invention.
FIG. 2 is a drawing showing a process diagram of an economical nickel smelting method combining wet and dry processes from nickel concentrate according to an exemplary embodiment of the present invention.
FIG. 3 is a drawing showing the composition of sulfide concentrate containing nickel.

### DETAILED DESCRIPTION OF THE EMBODIMENTS

Terms such as first, second and third are used to describe, but are not limited to, various parts, components, regions, layers and/or sections. These terms are used only to distinguish one part, component, region, layer or section from another part, component, region, layer or section. Accordingly, a first part, component, region, layer or section described below may be referred to as a second part, component, region, layer or section within the scope not departing from the scope of the present invention.

The terminology used herein is for the purpose of referring to specific examples only, and is not intended to limit the present invention. As used herein, the singular forms also include the plural forms unless the phrases clearly indicate the opposite. The meaning of "comprising" as used in the specification specifies a specific characteristic, area, integer, step, operation, urea and/or component. Nor does it exclude the presence or addition of other characteristics, regions, integers, steps, operations, urea and/or components.

When a part is referred to as being "on" or "above" another part, it may be directly on or above the other part, or the other part may be involved in between. In contrast, when a part refers to being "directly on" another part, there is no intervening part in between.

Although not defined differently, all terms including technical and scientific terms used herein have the same meaning as commonly understood by a person of an ordinary skill in the technical field to which the present invention belongs.

Commonly used terms defined in the dictionary are additionally interpreted as having a meaning consistent with the related art literature and the presently disclosed content, and unless defined, are not interpreted in an ideal or very formal meaning.
Hereinafter, an exemplary embodiment of the present invention will be described in detail so that a person of an ordinary skill in the technical field to which the present invention belongs can easily implement. As those skilled in the art would realize, the described embodiments may be modified in various different ways, all without departing from the spirit or scope of the present invention.

### Economical nickel smelting method combining wet and dry processes from nickel concentrate

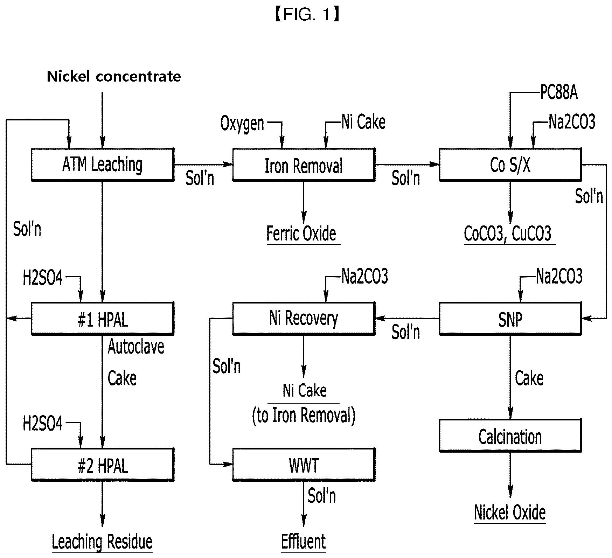

Referring Fig. 1, an economical nickel smelting method combining wet and dry processes from nickel concentrate according to an exemplary embodiment of the present invention comprises:
separating a leachate and leaching cake by leaching a nickel-containing sulfide concentrate with strong acid;
separating a first filtrate and a first impurities including iron by adding oxygen to the leachate;
separating a second filtrate and a second impurities including cobalt by adding an extraction agent to the first filtrate;
separating a third filtrate and a precipitate including nickel by adding sodium carbonate to the second filtrate; and
producing a nickel product by calcination of the precipitate.

First, in the leaching step, the Atmospheric Leaching (ATM) process is performed, in which nickel-containing sulfide concentrates are leached with strong acid and separated into leachate and leaching cake.

Based on 100% of the entire weight of the concentrate, nickel may contain 25% or more. Nickel contained in the concentrate may exist in the form of nickel sulfide (Ni₃S₂). The concentrate may further include magnesium (Mg), iron (Fe), cobalt (Co), manganese (Mn) and silicon (Si) in addition to nickel. At temperatures of 75 to 95°C, the concentrate can be leached with strong acids. The strong acid may comprise sulfuric acid.

Specifically, the leaching step may include a step of reducing iron in the leachate, a step of dissolving nickel in the leachate, and a step of removing hydrogen sulfide generated when nickel in the leachate is dissolved in a strong acid.

In the step of reducing iron in the leachate, trivalent iron may be reduced to divalent through reaction with nickel sulfide, and a reaction including the following chemical formula 1 may be performed. In this way, by reducing iron, iron can be removed in the form of ferric oxide by using oxygen.

[Chemical formula 1] Ni₃S₂ + 3Fe2 SO₄₃ → 3NiSO₄ + 6FeSO₄ + 2S

In the step of dissolving nickel in the leachate, nickel sulfide may be dissolved in sulfuric acid, and a reaction including the following chemical formula 2 may be performed.

[Chemical formula 2] Ni₃S₂ + 3H₂SO₄ -> 3NiSO₄ + 2H₂S + H₂

In the step of removing hydrogen sulfide, as in Chemical formula 2 above, hydrogen sulfide generated in the process of dissolving nickel in strong acid in the leachate can be removed by scrubbing. In this case, sodium hydroxide (NaOH) may be used.

Specifically, after the leaching step, a step of recovering the pressurized leachate by pressure leaching the leaching cake with a strong acid may be further performed, and in the leaching step, the pressurized leachate may be leached with a strong acid together with the concentrate.

In the pressure leaching step, a high-pressure acid leaching (HPAL, autoclave) process may be performed to recover the pressurized leachate by pressure leaching the leaching cake with strong acid.

Specifically, the pressure leaching step may include pressure leaching the leach cake with a strong acid to separate it into an intermediate leachate and an intermediate cake, and pressure leaching the intermediate cake with a strong acid to separate the pressure leachate and a leaching residue.

In the pressure leaching step, the leaching cake can be pressure leached with strong acid at a pressure of 13 to 20 bar and a temperature of 170 to 190°C using an autoclave. The strong acid may comprise sulfuric acid.

In the pressure leaching step, the nickel is dissolved in the form of nickel sulfate, and the dissolution rate of the nickel is 98 wt% or more with respect to 100 wt% of the entire nickel weight. More specifically, it may be 99.8 wt% or more. The dissolution rate of nickel under atmospheric conditions may be only 50 wt% or less. The dissolution rate of nickel can be increased by two-stage pressure leaching using an autoclave.

Nickel may be dissolved in the form of nickel sulfate (NiSO₄), and a reaction including the following chemical formula 3 to chemical formula 6 may be performed.

[Chemical formula 3] Ni3S₂ + 3H₂SO₄ + 0.5O₂ → 3NiSO₄ + 2H₂S + H₂O

[Cemical formula 4] Ni3S₂ + H₂SO₄ + 4.5O₂ → 3NiSO₄ + H₂O

[Chemical formula 5] 2FeS + 2H₂SO₄ + O₂ → 2FeSO₄ + 2H₂O + 2S

[Chemical formula 6] 2FeS + H₂SO₄ + 4.5O₂ Fe₂SO₄₃ + H₂O

After two stages of pressure leaching, the leaching residue may contain up to 2 wt % nickel. More specifically, 0.2 wt% or less of nickel may be included. In addition, 20 to 30 wt% of iron and 10 to 20 wt% of silicon may be further included, and it may be used as a substitute for DRS's Molding sand or removable appliance.

In addition, in the leaching residue, a noble metal including one or more of gold, silver, platinum and palladium may exist in a concentrated state without being dissolved.

The pressurized leachate can be leached again with a strong acid along with the concentrate to minimize nickel loss.

Next, in the step of adding oxygen to the leachate, an iron removal process is performed in which oxygen is added to the leachate and separated into a first filtrate and a first impurity containing iron.

Specifically, in the step of adding oxygen to the leachate, a neutralizing agent may be added along with oxygen to separate the first filtrate and first impurities. The neutralization agent may use a nickel cake obtained in the Ni recovery process. Nickel cakes may contain nickel carbonate (NiCO₃).

A reaction including the following chemical formula 7 and chemical formula 8 can be made.

[Chemical formula 7] 2FeSO₄ + 2NiCO₃ + H₂O+ 0.5O₂ → 2FeOOH + 2NiSO₄ + 2CO₂

[Chemical formula 8] 2FeSO₄ + 2H₂O + 0.5O₂ → Fe₂O₃ + 2H₂SO₄

After the step of adding oxygen to the leachate, a step of washing the first impurities with water and separating the first impurities into a washing filtrate and a washing residue containing iron oxide may be further performed.

Next, in the step of adding the extraction agent to the first filtrate, a Co S/X process is performed in which the extraction agent is added to the first filtrate to separate a second filtrate and a second impurities including cobalt.

In this case, the extraction agent may comprise PC88A (2-Ethylhexyl phosphonic acid mono-2-ethylhexyl ester). Accordingly, cobalt in the second impurity may exist in a precipitated state with cobalt carbonate (CoCO₃). In addition, copper in the second impurity may exist in a precipitated state with copper carbonate (CuCO₃).

Next, in the step of adding sodium carbonate to the second filtrate, a selective nickel precipitation (SNP) process is performed in which sodium carbonate is added to the second filtrate and separated into a precipitate containing a third filtrate and nickel.

Through this, it is possible to selectively precipitate only nickel in the second filtrate and then recover it. The second filtrate and sodium carbonate can be reacted at a temperature of 70 to 90°C, and the pH can be adjusted to 6 to 8 by adding sodium carbonate.

As shown in the reaction scheme below, nickel can be precipitated in the form of Basic Nickel Carbonate, which can be expressed as 2NiCO₃·3Ni (OH)₂·4H₂O.

[Reaction scheme] 5NiSO₄ + 5Na₂CO₃ + 7H₂O → 2NiCO₃·3Ni (OH)₂·4H₂O↓ + 5Na₂SO₄ + 3CO₂

Specifically, after the step of adding sodium carbonate to the second filtrate, a step of adding sodium hydroxide to the precipitate and washing with water may be further performed. By washing with water multiple times to remove unreacted nickel sulfate as shown in the following chemical formula 9, the sulfur content in the precipitate can be adjusted to 0.2 wt% or less.

[chemical formula 9] NiSO₄ + 2NaOH → Ni (OH)2 + Na₂SO₄

Specifically, after the step of adding sodium carbonate to the second filtrate, sodium carbonate is added to the third filtrate to perform a nickel recovery process to prepare a nickel cake that is separated into a nickel recovery filtrate and a nickel cake.

Specifically, in the step of adding sodium carbonate to the third filtrate, the third filtrate and the sodium carbonate can be reacted at a temperature of 70 to 90 °C, and the pH can be adjusted to 6 to 8 by adding sodium carbonate. By adjusting the pH, more than 25 wt% of magnesium can be incorporated into the nickel cake with respect to 100 wt% of the entire magnesium. Accordingly, the recovery amount of magnesium can be increased. If the pH is too high, magnesium as an impurity may be incorporated into the nickel cake, and if the pH is too low, the nickel yield may decrease.

Also, as mentioned above, as a neutralization agent, nickel cake can be added together with oxygen to separate it into first filtrate and first impurities. Nickel cakes may contain nickel carbonate (NiCO₃). Accordingly, the nickel loss rate can be minimized.

Specifically, after the step of adding sodium carbonate to the third filtrate, calcium hydroxide is added to the nickel recovery filtrate to separate the gypsum filtrate and residue, and a Waste Water Treatment (WWT) process can be performed.

The pH can be adjusted to 9.5 or higher by adding calcium hydroxide. In order to meet the effluent standard (nickel content of 1 mg/L or less), calcium hydroxide can be added to adjust the pH to 9.5 or higher. The following Table 1 shows the change in the nickel content according to pH when the temperature is 40°C.

**(Table 1)**

| | pH 8.0 | pH 9.0 | pH 9.5 |
|---|---|---|---|
| Content of nickel (mg/L) | 16 | 3.5 | 0.1 |

As shown in the Table 1, it can be confirmed that when the pH is 9.5, the nickel content becomes 0.1 mg/L, which satisfies the effluent standard.

On the other hand, when the pH is 9.5, as shown in the following chemical formula 10, magnesium remains 3.4 mg/L, and the remainder is precipitated with magnesium hydroxide (Mg(OH)₂). Since the gypsum is generated together, the amount of residue increases significantly, which may require disposal.

[Chemical formula 10] MgSO₄ + Ca (OH)2 + 2H₂O → Mg (OH)2 + CaSO₄·2H₂O

Next, in the step of producing a nickel product, a calcination process is performed to produce a nickel product by calcination of a precipitate.

Specifically, the precipitate is calcined at 700 to 900 °C, and the precipitate may include nickel oxide.

At above 120°C, water and crystal water evaporate, at above 230°C, nickel hydroxide is decomposed into nickel oxide and at above 400°C, nickel carbonate can be decomposed into nickel oxide. Above 800°C, for 100 wt% of the entire nickel product, the sulfur content can be less than 0.1 wt%.

Hereinafter, a specific example of the present invention is described. However, the following Example is only an exemplary embodiment of the present invention, and the present invention is not limited to the following Example.

### Example

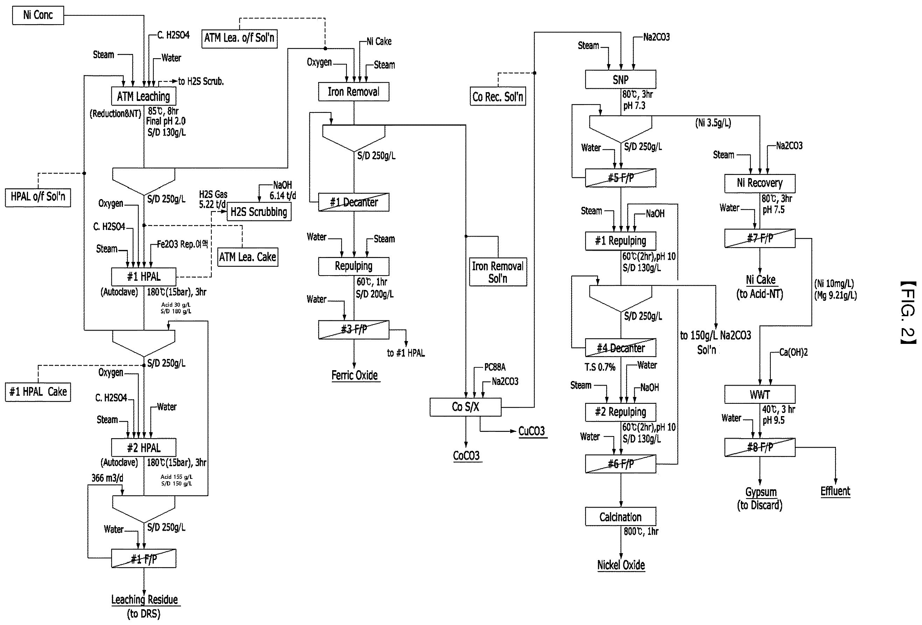

Referring to Fig. 2, an example of the invention will be described.

### (1) Atmospheric leaching of concentrates with strong acids

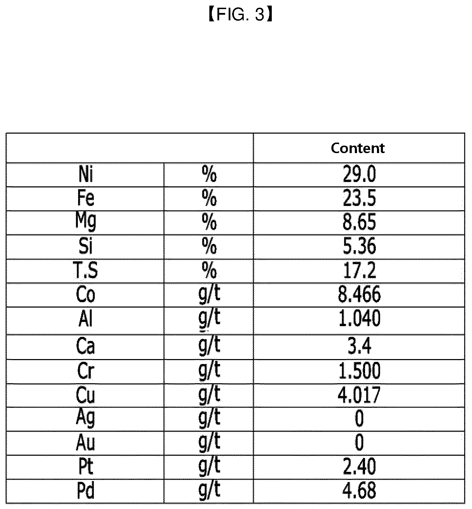

The components of sulfide concentrates containing nickel are shown in Fig. 3 is shown. The sulfide concentrate containing nickel oxide was leached at 85°C for 8 hours. The final pH of the leachate was 2.0.

The composition of leachate (ATM lea. o/f Sol'n) was shown in the following Table 2, and the composition of the leaching cake was shown in the following Table 3. The composition of a pressurized leachate (HPAL o/f Sol'n), was shown in the following Table 4.

**(Table 2)**

| division | Ni | Fe | Mg | Si | Co | Cr | Cu | Mn |
|---|---|---|---|---|---|---|---|---|
| g/L | 55.6 | 32.1 | 16.9 | 0.27 | 1.65 | 0.29 | 0.79 | 0.08 |

**(Table 3)**

| division | Ni | Fe | Mg | Si | Co | Cr | Cu | Mn |
|---|---|---|---|---|---|---|---|---|
| wt% | 24.1 | 23.6 | 4.52 | 6.68 | 0.74 | 0.04 | 0.50 | 0.04 |

**(Table 4)**

| | Ni | Fe | Mg | Si | Co | Cr | Cu | Mn | H₂SO₄ |
|---|---|---|---|---|---|---|---|---|---|
| g/L | 58.0 | 34.3 | 14.1 | 0.32 | 1.73 | 0.20 | 1.00 | 0.08 | 58.2 |

### (2) High Pressure Acid Leaching by adding strong acid to the leaching cake

Sulfuric acid, oxygen, and vapor were added to the leaching cake and leached under pressure with an autoclay at 180°C and 15 bar for 3 hours. Pressurized leaching was carried out in two stages. The intermediate cake #1 HPAL Cake and the leaching residue #2 HPAL Residue were shown in the following Table 5 and Table 6.

**(Table 5)**

| | Ni | Fe | Mg | Si |
|---|---|---|---|---|
| Content (wt%) | 3.24 | 19.8 | 0.07 | 22.2 |

**(Table 6)**

| | Ni | Fe | Mg | Si | Co | Cr | Cu | Mn | Pt | P d | T.S |
|---|---|---|---|---|---|---|---|---|---|---|---|
| Conten t | .17 Wt % | 5.2 Wt % | .05 Wt % | 8.7 Wt % | .02 Wt % | 0.002Wt % | .01 Wt % | .02 Wt % | .6 g/t | 7 g/t | .28 Wt % |

### (3) Add oxygen to the leachate to separate the first impurities (Iron Removal)

Nickel cake as oxygen, vapor and neutralization agent was added to the leachate (ATM Lea. o/f Sol'n) to separate the first filtrate (Iron Removal Sol'n), and first impurities. Thereafter, the first impurities were washed with water and vapor to separate the ferric oxide.

The first filtrate (YD Sol'n) and Ferric Oxide, was shown in the following Table 7 and Table 8.

**(Table 7)**

| | Ni | Fe | Mg | Si | Co | Cr | Cu | Mn |
|---|---|---|---|---|---|---|---|---|
| g/L | 53.6 | 0.15 | 18.3 | 0.15 | 1.40 | 0.001 | 0.65 | 0.06 |

**(Table 8)**

| | Ni | Fe | Mg | Si | Co | Cr | Cu | Mn |
|---|---|---|---|---|---|---|---|---|
| wt% | 0.30 | 40.0 | 0.02 | 0.10 | 0.003 | 0.03 | 0.001 | 0.004 |

### (4) Separate the second impurities by adding an extraction agent to the first filtrate (Co S/X)

Carbonate sodium and PC88A (2-Ethylhexyl phosphonic acid mono-2-ethylhexyl ester), the extraction agent, were added to the first filtrate (HYD Sol'n), and the second filtrate (Co Rec. Sol'n) and second impurities were separated. Accordingly, the second impurities including cobalt carbonate containing more than 40 wt% of cobalt and copper carbonate containing more than 40 wt% of copper were separated.

The second filtrate (Co Rec. Sol'n) was shown in the following Table 9.

**(Table 9)**

| | Ni | Fe | Mg | Si | Co | Cr | Cu | Mn |
|---|---|---|---|---|---|---|---|---|
| g/L | 53.6 | 0.001 | 18.3 | 0.15 | 0.03 | 0.0003 | 0.03 | 0.0002 |

### (5) Precipitation was prepared by adding sodium carbonate to the second filtrate (Selective Nickel Precipitation)

Sodium carbonate and vapor were added to the second filtrate (Co Rec. Sol'n). The temperature was 80 °C and the pH was 7.3. Accordingly, a third filtrate and a precipitate containing nickel were separated.

Then, the precipitate was washed twice with sodium hydroxide, water and vapor to obtain SNP Cake. The washing temperature was 70°C and the pH was 10.

The composition of SNP Cake was shown in the following Table 10.

**(Table 10)**

| | Ni | Fe | Mg | Si | Co | Cu | Mn | T.S |
|---|---|---|---|---|---|---|---|---|
| wt% | 45.0 | 0.0005 | 1.94 | 0.14 | 0.0265 | 0.031 | 0.0002 | 0.20 |

### (6) Manufacture a nickel cake by adding sodium carbonate to the third filtrate (Ni Recovery)

Sodium carbonate and vapor were added to the third filtrate. The temperature was 80 °C and the pH was 7.5. The reaction was carried out for 3 hours. Thus, a nickel cake was obtained.

The composition of the nickel cake was shown in the following Table 11.

**(Table 11)**

| | Ni | Mg |
|---|---|---|
| wt% | 16.9 | 11.5 |

### (7) After treatment by adding calcium hydroxide to the nickel recovery filtrate, waste water treatment

After the nickel cake was separated, calcium hydroxide and water were added to the remaining nickel recovery filtrate. The temperature was 40 °C and the pH was 9.5. The reaction was carried out for 3 hours. As a result, a gypsum, and an efluent as a residue, were obtained. The COD of an effluent was 49 mg/L.

The composition of Gypsum was shown in the following Table 12, and the composition of an effluent was shown in the following Table 13. Through this, it can be confirmed that the effluent standard was satisfied.

**(Table 12)**

| | Ni | Mg | CaO | SO₃ | Water |
|---|---|---|---|---|---|
| wt% | 0.05 | 7.74 | 11.1 | 16.7 | 40.0 |

**(Table 13)**

| | As | Cd | Co | F | Hg | Mg | Mn | N | Ni | Sb | Se | Si | Zn |
|---|---|---|---|---|---|---|---|---|---|---|---|---|---|
| mg/L | 0.1 | <0.01 | N.D | <1 | N.D | .5 g/L | <1 | 2.5 | <1 | <0.1 | N.D | 1.3 | <0.01 |

### (8) Calcination of precipitate to produce nickel product (Calcination)

The precipitate, SNP Cake, was calcined to obtain nickel oxide as a nickel product. The temperature was 800 °C, and the process was carried out for 1 hour.

The composition of Nickel Oxide as a nickel product, was shown in the following Table 14.

**(Table 14)**

| | Ni | Fe | Mg | Si | Co | Cu | Mn | T.S |
|---|---|---|---|---|---|---|---|---|
| wt% | 70.0 | 0.001 | 3.02 | 0.22 | 0.0412 | 0.048 | 0.0002 | 0.05 |

The present invention is not limited to the embodiments and/or exemplary embodiments, but may be manufactured in various different forms. It will be understood that a person of an ordinary skill in the art to which the present invention pertains may be practiced in other specific forms without changing the technical spirit or essential characteristics of the present invention. Therefore, it should be understood that the embodiments and/or exemplary embodiments described above are illustrative in all respects and not restrictive.

## Claims

1. An economical nickel smelting method combining wet and dry processes from nickel concentrate comprises:
separating a leachate and leaching cake by leaching a nickel-containing sulfide concentrate with strong acid;
separating a first filtrate and a first impurities including iron by adding oxygen to the leachate;
separating a second filtrate and a second impurities including cobalt by adding an extraction agent to the first filtrate;
separating a third filtrate and a precipitate including nickel by adding sodium carbonate to the second filtrate; and
producing a nickel product by calcination of the precipitate.

2. The method of claim 1, wherein:
after the leaching step, the method further comprises the step of recovering the pressurized leachate by pressure leaching the leaching cake with a strong acid, and
in the leaching step, the pressurized leachate is used into the concentrate with strong acid.

3. The method of claim 2, wherein:
the pressure leaching step includes:
a step of pressure leaching the leaching cake with a strong acid to separate it into an intermediate leachate and an intermediate cake; and
a step of separating the intermediate cake into the pressurized leachate and leaching residue by pressure leaching with strong acid.

4. The method of claim 1, wherein:
after the step of adding sodium carbonate to the second filtrate, a step of adding sodium carbonate to the third filtrate to separate a nickel recovery filtrate and a nickel cake, is further included.

5. The method of claim 4, wherein:
after the step of adding sodium carbonate to the third filtrate, a step of separating into gypsum filtrate and residue by adding calcium hydroxide to the nickel recovery filtrate, is further included.

6. The method of claim 1, wherein:
in the leaching step, leaching the concentrate with strong acid at a temperature of 75 to 95°C.

7. The method of claim 1, wherein:
the leaching step further comprises:
reducing iron in the leachate;
dissolving nickel in the leachate; and
removing hydrogen sulfide generated in the process of dissolving nickel in strong acid in the leachate.

8. The method of claim 2, wherein:
in the pressure leaching step, pressure leaching the leaching cake with strong acid at a temperature of 170 to 190°C.

9. The method of claim 2, wherein:
in the pressure leaching step, pressure leaching the leaching cake with strong acid at a pressure of 13 to 20 bar using an autoclave.

10. The method of claim 1, wherein:
in the pressure leaching step, the nickel is dissolved in the form of nickel sulfate, and the dissolution rate of the nickel is 98 wt% or more with respect to 100 wt% of the entire nickel weight.

11. The method of claim 1, wherein:
in the step of adding oxygen to the leachate, a neutralization agent is added along with the oxygen to separate the first filtrate and the first impurities.

12. The method of claim 2, wherein:
after the step of adding oxygen to the leachate, a step of washing the first impurities with water to separate a washing filtrate and a washing residue containing iron, is further included.

13. The method of claim 1, wherein:
in the step of adding the extraction agent to the first filtrate, sodium carbonate is added together with the extraction agent to separate the second filtrate and the second impurities.

14. The method of claim 13, wherein:
the extraction agent includes PC88A (2-Ethylhexyl phosphonic acid mono-2-ethylhexyl ester).

15. The method of claim 1, wherein:
in the step of adding sodium carbonate to the second filtrate, the second filtrate reacts with the sodium carbonate at a temperature of 70 to 90 °C.

16. The method of claim 1, wherein:
in the step of adding sodium carbonate to the second filtrate, the pH is adjusted to 6 to 8 by adding the sodium carbonate.

17. The method of claim 1, wherein:
in the step of adding sodium carbonate to the second filtrate, a reaction including the following reaction scheme is performed.
[Reaction scheme] 5NiSO₄ + 5Na₂CO₃ + 7H₂O → 2NiCO₃·3Ni (OH)₂·4H₂O↓ + 5Na₂SO₄ + 3CO₂

18. The method of claim 1, wherein:
after the step of adding sodium carbonate to the second filtrate, a step of adding sodium hydroxide to the precipitate and washing with water, further included.

19. The method of claim 18, wherein:
in the step of adding sodium hydroxide to the precipitate, the water washing is performed multiple times to adjust the sulfur content in the precipitate to 0.2 wt% or less.

20. The method of of claim 4, wherein:
in the step of adding sodium carbonate to the third filtrate, reacting the third filtrate with the sodium carbonate is performed at a temperature of 70 to 90 °C.

21. The method of claim 4, wherein:
in the step of adding sodium carbonate to the third filtrate, the pH is adjusted to 6 to 8 by adding the sodium carbonate.

22. The method of claim 1, wherein:
the precipitate is calcined at a temperature of 700 to 900°C, and the precipitate contains nickel oxide.

23. The method of claim 1, wherein:
with respect to the entire 100 wt% of the nickel product, sulfur is less than 0.1 wt%.
